# EUROPÄISCHE PATENTSCHRIFT

(11) **EP 4 446 192 B1**
(45) Veröffentlichungstag und Bekanntmachung des Hinweises auf die Patenterteilung: **04.02.2026**
(21) Anmeldenummer: 24169980.0
(22) Anmeldetag: 12.04.2024
(51) Int. Cl.: B61D 25/00, B60J 10/70, B60J 10/36

(54) **FAHRZEUGFENSTERANORDNUNG UND VERFAHREN ZUM FESTLEGEN EINER FAHRZEUGFENSTERSCHEIBE**
VEHICLE WINDOW ASSEMBLY AND METHOD FOR FIXING A VEHICLE WINDOW PANE
ENSEMBLE VITRE DE VÉHICULE ET PROCÉDÉ DE FIXATION D'UNE VITRE DE VÉHICULE

(30) Priorität: 13.04.2023 DE 102023109353
(43) Veröffentlichungstag der Anmeldung: 16.10.2024
(73) Patentinhaber: K & K Beteiligungs GmbH, 42277 Wuppertal NRW (DE)
(72) Erfinder: Kemper, Michael Klaus, 44797 Bochum (DE); Klostermeier, Andreas, 40724 Hilden (DE)
(74) Vertreter: Roche, von Westernhagen & Ehresmann

(56) Entgegenhaltungen:
- EP-A1- 3 604 009
- EP-B1- 0 709 269
- DE-A1- 3 204 351
- US-A- 4 483 113
- US-A- 4 621 469

## Beschreibung

Die Erfindung betrifft gemäß einem ersten Aspekt eine Fahrzeugfensteranordnung gemäß dem Oberbegriff des Anspruches 1.

Aus dem Stand der Technik sind bei Schienen- oder Nutzfahrzeugen stete Bemühungen bekannt, den Einbau bzw. die Auswechselbarkeit von Scheiben, beispielsweise Panorama-Scheiben, zu vereinfachen bzw. zu verbessern.

Als besonders geeignet zur Erzielung einer schnellen Auswechselbarkeit hat sich hierbei eine druckschriftlich nicht belegbare Fahrzeugfensteranordnung herausgestellt, bei welcher ein Klemmsystem (bestehend aus einem Gummi-Klemmprofil und einem dazugehörigen, in das Klemmprofil einsteckbaren Kederelement) benutzt wird. Das Klemmprofil wird dabei zwischen Scheibe und Wagenkasten angeordnet und kann insbesondere zur Aufnahme der Fensterscheibe aufgeweitet werden. Damit die Scheibe anschließend nicht ohne Weiteres aus dem aufgeweiteten Klemmprofil herausgelangen kann, kann nach Einführen der Scheibe ein Kederelement in das Klemmprofil eingeführt werden, um dieses zu festigen bzw. starr zu machen.

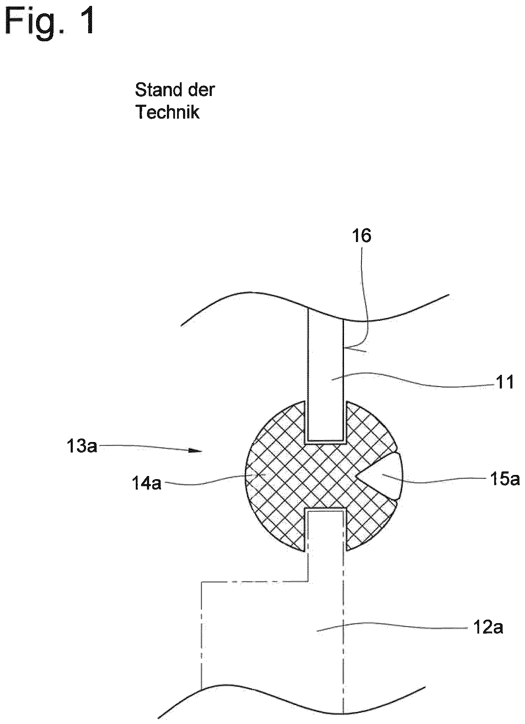

Ein solches System ist in Fig. 1 dargestellt, bei welchem das Klemmsystem 13a aus einem im Querschnitt im Wesentlichen kreisförmigen, umlaufenden Klemmprofil 14a besteht sowie einem einsteckbaren, im Querschnitt etwa keilförmigen Kederelement 15a.

Soll nun, ausgehend von Fig. 1 beispielsweise die Fensterscheibe 11 ausgetauscht werden, so kann zunächst das Kederelement 15a entnommen werden, anschließend der entsprechende Aufnahmespalt im Klemmprofil 14a aufgeweitet werden, gegebenenfalls zwischen der Scheibe 11 und dem Klemmprofil 14a befindlicher Kleber entfernt und die Scheibe 11 entnommen werden.

Bei manchen Fahrzeugherstellern ist das in Fig. 1 dargestellte System allerdings aus verschiedenen Gründen nicht erwünscht, beispielsweise sofern eine ungetrübte Optik im Bereich zwischen der Außenseite 16 der Fensterscheibe 11 und der Außenseite des Wagenkastens 12a bevorzugt wird.

Die Aufgabe der vorliegenden Erfindung liegt demgemäß darin, eine optisch ansprechende Fahrzeugfensteranordnung bei einfacher Auswechselbarkeit zu ermöglichen.

Die Erfindung löst die gestellte Aufgabe gemäß dem ersten Aspekt mit den Merkmalen des Patentanspruches 1.

Es wird eine Fahrzeugfensteranordnung bereitgestellt, bei welcher das gesamte Klemmsystem hinter die Bündigkeitsebene von Fensteraußenseite und Wagenkastenaußenseite zurückspringt.

Da hierfür in der Regel die Fensterscheibe nicht mehr beidseitig umgreifbar ist, wird erfindungsgemäß ein Hilfsrahmen vorgesehen.

Eine solche Lösung ist grundsätzlich aus dem Stand der Technik in Form der DE 32 04 351 A1 bekannt, wobei die Klemmprofile dort zwecks Arretierung stets einen wagenkastenartigen Steg übergreifen, was in der Praxis aufgrund von Spielproblemen jedoch dazu führt, dass Klemmprofil und Scheibe tatsächlich meist überhaupt gar nicht bündig ausgerichtet werden können.

Andere Druckschriften offenbaren dann die genannten Systeme, bei welchen die Fensterscheibe beidseitig umgriffen wird, beispielsweise die EP 3 604 009 A1, die EP 0 709 269 B1, US 4 621 469 A und US 4 483 113 A.

Dabei ist es aus dem Stand der Technik natürlich grundsätzlich bereits bekannt, Fensterscheiben einer Fahrzeugfensteranordnung bündig zur einer sie umgebenden Außenseite des Wagenkastens anzuordnen. Hierzu werden allerdings keine Klemmsysteme mit Keder benutzt, sondern Fensterscheiben lediglich von hinten beaufschlagende Gummiprofile. Alternativ werden die Fenster nicht mit einem Klemmprofil befestigt, sondern mit Hilfe von Schrauben (welche zur Außenseite hin mit Blenden verdeckt werden) oder aber die Fenster(-Halterungen) werden verklebt, was allerdings gegen die erfindungsgemäß geforderte schnelle Auswechselbarkeit spricht.

Erfindungsgemäß wird nunmehr ein Klemmsystem vorgeschlagen, welches ein (umlaufendes) Klemmprofil aufweist und mindestens ein Kederelement. Das Kederelement ist dabei jedenfalls teilweise in das Klemmprofil einsteckbar.

In diesem Sinne kann das Kederelement beispielsweise vollständig in das Klemmprofil eingesteckt werden oder nur teilweise (beispielsweise mit einem Abschnitt oder einem Flansch oder ähnlichem, wobei im letzteren Fall dann ein anderer Abschnitt oder Flansch beispielsweise mit der Fensterscheibe oder mit dem Hilfsrahmen oder dem Wagenkasten oder ähnlichem kooperieren kann).

In diesem Sinne können selbstverständlich auch mehrere Kederelemente vorgesehen sein. Es kann sich hierbei um mehrere separate, umlaufende Kederprofile handeln, welche in einem Querschnitt übereinander angeordnet sind. Alternativ kann es sich selbstverständlich auch um mehrere nicht umlaufende Kederelemente handeln, welche beispielsweise in Längsrichtung des Fahrzeugs hintereinander angeordnet sind oder ähnliches.

Das mindestens eine Kederelement kann dabei aus demselben Material bestehen wie das Klemmprofil oder auch aus einem anderen. Typischerweise besteht das Klemmprofil aus Gummi. Alternativ kann es aber auch aus einem anderen geeigneten, insbesondere elastischen, Material bestehen, wie beispielsweise einem Kunststoff.

Das mindestens eine Kederelement kann z. B. auch aus Gummi bestehen oder alternativ aus einem Kunststoff oder sogar aus Metall oder einem anderen geeigneten Material.

Bei dem Kederelement handelt es sich mithin um ein Element, welches zur Aussteifung in das Klemmprofil eingebracht wird bzw. teilweise eingebracht wird. Ein Kederelement wird im Stand der Technik gelegentlich auch als "Füller" oder "Füllerelement" bezeichnet. Es dient dabei der Aussteifung des Klemmprofils, mithin einer Art Selbsthemmung des Klemmprofils.

Bei nicht eingestecktem Kederelement kann das Klemmprofil (insbesondere im Bereich des Aufnahmespaltes) beispielsweise aufgeweitet werden, um das Einführen (oder Entnehmen) eines Hilfsrahmens der Scheibe zu ermöglichen. Ist der Hilfsrahmen eingeführt, kann das Kederelement (ganz oder jedenfalls mit einem Teil) in das Klemmprofil eingesteckt werden, um das Klemmprofil auszusteifen (bzw. den Aufnahmespalt zusammenzudrücken und den Hilfsrahmen sicher am Klemmprofil zu arretieren.

Eine Besonderheit besteht darin, dass weder das Klemmprofil noch das mindestens eine in das Klemmprofil eingesteckte Kederelement (bzw. bei einer Mehrzahl von Kederelementen sämtliche Kederelemente) über die Außenseite der Fensterscheibe und/oder über die Außenseite des die Fensterscheibe umgebenden Wagenkastenbereiches überstehen.

Dies bedeutet insbesondere, dass das gesamte Klemmsystem (Klemmprofil und Kederelement(e)) innerhalb der äußeren Fahrzeug(hüll)kontur angeordnet sind, welche von der Außenseite der Fensterscheibe, gegebenenfalls in Kombination mit der Außenseite des die Fensterscheibe umgebenden Wagenkastenbereiches, ausgebildet wird.

Insbesondere das Kederelement (oder die Kederelemente), aber auch das Klemmprofil, stehen somit hinsichtlich des Fahrzeugs nicht nach außen (hin) vor.

Klemmprofil und/oder Kederelement(e) können sich somit bis in die Ebene der Außenseite der Fensterscheibe hinein erstrecken oder vor dieser enden (und somit einen Rücksprung in der Außenkontur des Fahrzeuges im Bereich zwischen Fensteraußenseite und Außenseite des das Fenster umgebenden Wagenkastenabschnittes ausbilden).

Mit anderen Worten sind von der Erfindung Rücksprünge im Bereich des Klemmsystems (in die Fahrzeugkontur hinein) erfasst, nach außen gerichtete, wesentliche Überstände jedoch nicht.

Dies hat insbesondere damit zu tun, dass den Anforderungen der Fahrzeughersteller an eine Bündigkeit genüge getan ist, sofern keine Vorsprünge im Bereich des Klemmsystems nach außen hin existieren. In dem Bereich gegebenenfalls vorhandene Rücksprünge zum Fahrzeuginneren hin können, sofern sie völlig unerwünscht sind, im Zweifel hingegen mit Blenden oder Blendelementen abgedeckt werden.

Bevorzugterweise schließt das Klemmsystem, insbesondere das Kederelement, aber etwa in der Ebene ab, welche von der Außenseite der Fensterscheibe bereitgestellt wird, in welchem Fall das Vorsehen separater Blendelemente nämlich unnötig sein kann.

Das Klemmprofil kooperiert hierbei typischerweise einerseits mit einem der Fensterscheibe zugeordneten Hilfsrahmen (wobei es einen Fortsatz oder Flansch des Hilfsrahmens insbesondere ausnehmen kann) und andererseits, insbesondere mit einem entgegengesetzten Ende, mit einem Montageabschnitt des Wagenkastens.

Mit anderen Worten bildet das Klemmprofil die Verbindung (bzw. einen Teil davon) zwischen Hilfsrahmen (samt Fensterscheibe) und Wagenkasten aus (so dass beispielsweise eine zeitaufwendige Schraubverbindung zwischen Hilfsrahmen und Wagenkasten entbehrlich ist).

Insbesondere kann das Klemmprofil hierfür in einen wagenkastenseitig festen Abschnitt des Fahrzeuges eingesteckt werden.

Beispielsweise kann hierfür am Wagenkasten eine (festmontierte) Halteschiene oder Aufnahmerinne oder ähnliches vorgesehen sein, in welche das Klemmprofil einfach eingesteckt oder eingeklemmt wird. Hierin kann sich das Klemmprofil dann formschlüssig halten.

Die wagenkastenseitige Aufnahme ist dabei an einer Montagefläche des Wagenkastens verklebt, jedenfalls nicht-lösbar oder bedingt-lösbar an dieser gehalten. Hingegen kann das Klemmprofil grundsätzlich lösbar an der Aufnahme befestigt sein.

Das Kederelement kann zumindest einen Einsteckabschnitt vorsehen, welcher in eine Aufnahme des Klemmprofils einsteckbar ist. Insbesondere kann das Kederelement in der Aufnahme des Klemmprofils verkeilen oder eine hinterschnittene Fläche in der Aufnahme des Klemmprofils hintergreifen (beispielsweise mit einem Vorsprung oder ählichem).

An der Fensterscheibe ist erfindungsgemäß ein umlaufender Hilfsrahmen vorgesehen, welcher das Anbringen der Fensterscheibe am Wagenkasten erleichtert.

Insbesondere ragt der Hilfsrahmen seitlich über den Rand der Fensterscheibe vor. Dies bedeutet, dass, wenn man die Fensterscheibe flach auf den Boden legen würde, besagter Rahmen die Außenkontur des Fensters umgeben würde (der Durchmesser des Hilfsrahmens ist sowohl in horizontaler als auch in vertikaler Richtung größer als der Durchmesser der Fensterscheibe).

Auf diese Weise wird insbesondere ein Herausfallen der Fensterscheibe aus dem Fahrzeug nach außen verhindert.

Der Hilfsrahmen ist dabei (im Querschnitt) beabstandet von der Außenseite der Fensterscheibe angeordnet, was insbesondere bedeutet, dass er hinter die Außenkontur der Fensterscheibe bzw. des Fahrzeuges zurückspringt. Genau diese Ausbildung ermöglicht hierbei eine erfindungsgemäße bündige Anordnung der Außenseite der Fensterscheibe mit der Außenseite der sie umgebenden Abschnitte des Wagenkastens. Der Hilfsrahmen ist somit nach innen versetzt von der Außenseite der Fensterscheibe angeordnet und kann insbesondere beidseitig von dem Klemmsystem bzw. dem Klemmprofil umgriffen werden (welche Art der Umgreifung für die Fensterscheibe selber bei einer gewünschten bündigen Anordnung gerade nicht möglich ist).

Insbesondere ist der Hilfsrahmen nicht nur beabstandet von der Außenseite der Fensterscheibe angeordnet, sondern beabstandet von der Fensterscheibe an sich, liegt also mithin in einer anderen Ebene als besagte Fensterscheibe, nämlich in einer nach innen (parallel) versetzten Ebene.

Typischerweise ist der Hilfsrahmen aus Metall, beispielsweise Aluminium, ausgebildet, kann aber auch, je nach gewünschter Ausführung der Fensteranordnung, aus einem anderen Material bestehen, beispielsweise einem geeigneten Kunststoff oder ähnlichem.

Typischerweise wirkt der Hilfsrahmen mit dem Klemmsystem zusammen, indem er in eine Aufnahme, beispielsweise nach Art einer Rille, Rinne, Sicke, Mulde oder eines Spaltes, des Klemmprofils einliegt oder eingreift. Die hierfür vorgesehene Aufnahme des Klemmprofils kann zum Einführen des Hilfsrahmens bzw. des Halteabschnittes des Hilfsrahmens aufgeweitet werden und anschließend kann dann das mindestens eine Kederelement in das Klemmprofil eingeführt werden, um das Klemmprofil, den Rahmen haltend, zu versteifen.

Der Hilfsrahmen liegt bevorzugt kleberlos in der Aufnahme/dem Aufnahmespalt des Klemmprofils ein.

Die Fahrzeugfensteranordnung ist an einem Schienen- oder Nutzfahrzeug vorgesehen, also beispielsweise an einem Zug, einer Straßenbahn, einer S-Bahn, einer Berg-, Seil- oder Zahnradbahn oder alternativ an einem Bus, beispielsweise einem Omnibus, Stadtbus, Caravan, Campingbus, Wohnwagen (auch Anhänger sind im Sinne der Erfindung als Fahrzeuge zu verstehen) oder einem Sonderfahrzeug oder Einsatzwagen, wie beispielsweise einem Feuerwehr-, Kranken- oder Polizeieinsatzwagen, aber auch einem Wasserfahrzeug (wie Boot oder Schiff) einem Räumfahrzeug, einem Baustellenfahrzeug, einem Bagger, einem Kran, einem Gabelstapler, einem Kettenfahrzeug, einer Kehrmaschine, einem Traktor, einem Lkw oder ähnlichem. Diese Aufzählung ist selbstverständlich nicht abschließend zu verstehen (insbesondere Pkws nutzen aber grundsätzlich andere Fenstertypen).

Die Fahrzeugfensteranordnung kann typischerweise im Seitenbereich eines Fahrzeuges vorgesehen sein oder selbstverständlich auch im Heck- oder Frontbereich, wobei sie eine bündige Fortsetzung der Fahrzeugseitenkontur ermöglicht (insbesondere eine rücksprungsfreie Fortführung, welche auch "flush" genannt wird).

Die Außenseite des Wagenkastens kann gemeinsam mit der Außenseite der Fensterscheibe(n) sozusagen die Außenhaut des Fahrzeuges ausbilden.

Ein derartiges Fahrzeug weist dabei immer einen Wagenkasten auf, wobei es sich um diejenige Struktur handelt, welche bei einem Pkw typischerweise "Karosserie" genannt wird. Im Sinne der vorliegenden Erfindung soll der Begriff "Wagenkasten" als Synonym zu dem Begriff "Karosserie" verstanden werden, wobei der "Wagenkasten" selbst bei Schienenfahrzeugen häufig auch der Einfachheit halber als "Karosserie" bezeichnet wird. Insbesondere bei Nutzfahrzeugen ist der Begriff "Wagenkasten" eher ungebräuchlich und soll insbesondere für diese Fahrzeuggattungen im Sinne der vorliegenden Erfindung als "Karosserie" verstanden werden.

Die Fahrzeugfensteranordnung weist gattungsgemäß mindestens eine Fensterscheibe auf. Grundsätzlich kann die Fahrzeugfensteranordnung aber auch mehrere, nach innen oder außen parallel versetzte Fensterscheiben aufweisen, insbesondere bei sogenannten "Verbundscheiben". Eine Verbundscheibe weist dabei mehrere Fensterscheiben auf.

Gemäß einer besonders vorteilhaften Ausführungsform der Erfindung besteht die Fensterscheibe aus Einscheibensicherheitsglas. Dieses Glas wird auch kurz "ESG" genannt und besteht in der Regel aus einer einzigen, speziell wärmebehandelten Scheibe, welche während der Verarbeitung auf Temperaturen oberhalb einer Transformationstemperatur erhitzt wird und danach schlagartig wieder abkühlt. Dies führt zu dem Effekt, dass die Sicherheit - im Gegensatz zu normalem Flachglas - erhöht ist, da das ESG-Glas im Schadensfall lediglich in sehr kleine Scherben zerfällt, welche für einen Nutzer oder Passagier weniger gefährlich sind. Von der Erfindung sind aber selbstverständlich auch sämtliche andere denkbaren Scheibenarten umfasst, wie beispielsweise VSG oder (Stufen-)Isolationsscheiben (auch aus mehreren ESGs).

Erfindungsgemäß kann vorgesehen sein, dass der umlaufende Hilfsrahmen und/oder das Klemmsystem dem Fahrzeuginnenraum zugeordnet ist bzw. auf der dem Fahrzeuginnenraum zugewandten Seite der Fensterscheibe angeordnet ist (insbesondere um eine Bündigkeit bzw. Vorsprungsfreiheit an der äußeren Fahrzeugkarosseriekontur zu ermöglichen).

Einige Teile der Fahrzeugfensteranordnung, wie beispielsweise der Hilfsrahmen oder eine Aufnahme für das Klemmprofil, können insbesondere an der Karosserie bzw. dem Wagenkasten verklebt sein. Hierzu kann jeder geeignete Kleber verwendet werden, beispielsweise ein (Einkomponenten-)Dickschichtkleber oder auch andere geeignete ein- oder mehrstufige Klebesysteme (beispielsweise mit Primer).

Gemäß der Erfindung ist vorgesehen, dass das Klemmprofil karosserieseitig bzw. wagenkastenseitig festgelegt ist.

Bevorzugt ist eine eindeutige, schraubenlose Lösbarkeit, z. B. durch ein Einschnappen oder ähnliches.

Insbesondere ist eine werkzeuglose formschlüssige Verbindung bevorzugt, welche durch ein einfaches Einstecken des Klemmprofils in ein wagenkastenseitiges Bauelement, nämlich eine Aufnahme oder eine Öffnung im Wagenkasten, realisierbar ist.

Hierzu kann das Klemmprofil erfindungsgemäß in eine wagenkastenseitige Aufnahme eingesteckt werden bzw. diese durchstecken und/oder in der Aufnahme einrasten oder einhaken.

Beispielsweise kann das Klemmprofil hierzu einen im Querschnitt pilzkopfartigen Montagefortsatz vorsehen, welcher insbesondere leicht kompressibel sein kann (hierbei ist es von Vorteil, wenn das Klemmprofil aus einem geeigneten Werkstoff wie einem Gummi hergestellt ist und/oder einen kompressierbaren Hohlraum aufweist).

Dieser (Montage-)Fortsatz kann dann in einer Aufnahme verrasten.

Die Aufnahme wird dabei, wie oben bereits geschildert, von einem separaten Element bereitgestellt, welches an dem Wagenkasten festgelegt ist (nämlich dort verklebt ist).

Hierbei wird die Aufnahme von einem wagenkastenseitigen Rahmen bzw. Aufnahmerahmen bereitgestellt, welcher insbesondere umlaufend um die Fensteröffnung platziert ist, die von der Fensterscheibe verschlossen werden soll.

Der Aufnahmerahmen kann vorzugsweise mehrteilig oder alternativ einstückig ausgebildet sein.

Vorzugsweise ist der Aufnahmerahmen an dem Wagenkasten verklebt, insbesondere über eine Klebeschicht. Diese Ausgestaltung weist den Vorteil auf, dass bei der Montage durch das Kleben bzw. die Klebeschicht mehr Spiel zur Verfügung steht.

Gemäß einer weiteren vorteilhaften Ausgestaltung der Erfindung weist das Kederelement einen in das Klemmprofil einsteckbaren Einführabschnitt auf. Dieser Einführabschnitt sorgt für die Vorspannung bzw. Selbsthemmung des Klemmprofils.

Das Kederelement kann insbesondere ausschließlich aus diesem Einführabschnitt bestehen.

Gemäß einer alternativen Ausgestaltung weist das Kederelement aber nicht nur einen Einführabschnitt, sondern auch einen nicht in das Klemmprofil einsteckbaren Seitenabschnitt oder Zusatzabschnitt auf.

Dieser zusätzliche Seitenabschnitt kann das Klemmprofil beispielsweise seitlich umgreifen.

In diesem Sinne könnte dieser beispielsweise eine Dichtung ausbilden, insbesondere um einen Spalt zwischen Klemmsystem und Fensterscheibe oder Hilfsrahmen abzudichten.

Alternativ kann der Seitenabschnitt aber auch als Verbindungsabschnitt zu einem weiteren Einführabschnitt des Kederelementes vorgesehen sein.

In diesem Sinne kann das Kederelement durchaus mehrere Einführabschnitte aufweisen, welche insbesondere an unterschiedlichen Positionen in das Klemmprofil (oder unterschiedliche Klemmprofile) eingreifen.

Auch könnten am Kederelement selbstverständlich mehrere Seitenabschnitte vorgesehen sein, beispielsweise um ein Klemmprofil beidseitig zu umgreifen oder ähnliches.

Gemäß einer weiteren, vorteilhaften, von den voranstehenden Absätzen unabhängigen, Idee kann das Klemmsystem mindestens eine Dichtlippe im Bereich der Fensterscheibe ausbilden. Insbesondere kann das Klemmsystem die Fensterscheibe oder den Hilfsrahmen kontaktieren, um einen Spalt zwischen Klemmsystem und Fensterscheibe bzw. Hilfsrahmen abzudichten. Es können in diesem Bereich eine Dichtlippe oder auch mehrere Dichtlippen vorgesehen sein.

Das Klemmsystem kann diese Dichtlippen bereitstellen, indem das Klemmprofil und/oder das Kederelemente die Dichtlippe bzw. die Dichtlippen aufweisen.

Grundsätzlich kann selbstverständlich auch mindestens eine Dichtlippe vom Klemmsystem im Bereich des Wagenkastens vorgesehen sein, beispielsweise um einen Spalt zwischen Wagenkasten und Klemmsystem abzudichten.

Gemäß einer besonders vorteilhaften Ausführungsform kann eine solche Dichtlippe auf die Fensterscheibe oder den Hilfsrahmen oder den Wagenkasten zu gespannt werden, indem ein Hilfskeder vorgesehen wird, welcher insbesondere in das Klemmprofil eingebracht wird. In diesem Fall wird die mindestens eine Dichtlippe insbesondere von dem Klemmprofil bereitgestellt.

Ein Hilfskeder kann als gesonderter Kederkörper von dem Kederelement ausgebildet sein oder von einem separaten Einführabschnitt desselben Kederelementes bereitgestellt werden, welches auch den Einführabschnitt zum Aussteifen des Klemmprofils zur Halterung der Fensterscheibe bereitstellt. In diesem Sinne kann der Hilfskeder das Klemmprofil insbesondere im Bereich der Dichtlippe zusätzlich versteifen bzw. die Dichtlippe nach außen zu dem das Klemmprofil umgebenden Bauteil vorspannen. Hierzu kann der Hilfskeder selbstverständlich auch in das Klemmprofil eingeführt bzw. eingesteckt werden, vorzugsweise in eine separate Mulde oder Aufnahme des Klemmprofils.

Gemäß einer besonders vorteilhaften Ausgestaltung der Erfindung weist das Klemmprofil eine Ablaufrinne auf. Diese Ablaufrinne kann beispielsweise zur Aufnahme von Kondenswasser und/oder der Ableitung von Kondenswasser an der Fensterscheibe genutzt werden. Insbesondere ist die Ablaufrinne dabei der Innenseite der Fensterscheibe zugeordnet und/oder der Innenseite des Hilfsrahmens.

So kann sie Kondenswasser aufnehmen, welches sich an der Innenseite der Fensterscheibe bildet oder Kondenswasser, welches sich auf der Innenseite einer weiteren, nach innen versetzten Fensterscheibe bildet (also beispielsweise an der Innenseite der innersten Scheibe einer Verbundscheibe).

Die Ablaufrinne kann dazu eine Neigung aufweisen oder im Wesentlichen ungeneigt bzw. waagerecht ausgebildet sein (und ihr können dann Ablaufkanäle oder ähnliches zugeordnet sein).

Gemäß einer weiteren Besonderheit der Erfindung kann das mindestens eine Kederelement bzw. die mehreren Kederelemente symmetrisch ausgebildet sein, insbesondere achssymmetrisch.

Dies bedeutet also insbesondere, dass bei einem Schnitt orthogonal zur Fahrzeuglängsrichtung ein achssymmetrisches Profil des Kederelementes erkennbar ist. Dies vereinfacht die Herstellbarkeit des Kederelementes und auch des Klemmprofils, in welches das Kederelement einsteckbar ist.

Gemäß einer weiteren vorteilhaften Ausgestaltung der Erfindung ist der Hilfsrahmen an der Fensterscheibe verklebt. Von der Erfindung sind aber selbstverständlich auch sämtliche anderen möglichen Anbringungsarten von Hilfsrahmen an der Fensterscheibe umfasst.

Besonders bevorzugt besteht der Hilfsrahmen aus Metall, insbesondere aus Aluminium. Alternativ kann der Hilfsrahmen aber auch aus einem anderen geeigneten Material, beispielsweise einem Kunststoff, bestehen.

Ein weiteres vorteilhaftes Ausführungsbeispiel der Erfindung sieht vor, dass der umlaufende Hilfsrahmen von einer Zweitfensterscheibe bereitgestellt wird, welche der Innenseite der Fensterscheibe zugeordnet ist. Dies kann beispielsweise bei einer Verbundscheibe der Fall sein, bei welcher die Fensterscheibe gemäß Hauptanspruch und die Zweitfensterscheibe als Teil der Verbundscheibe vorgesehen sind, insbesondere in einer planparallelen Anordnung.

In diesem Fall kann sich die Zweitfensterscheibe insbesondere über den Rand der (äußeren Haupt-)Fensterscheibe erstrecken bzw. über diesen hervorragen.

Dies ermöglicht dann, dass die Zweitfensterscheibe an ihrem Außenrand, welcher somit den Hilfsrahmen im Sinne der Erfindung darstellt, mit dem Klemmsystem bzw. dem Klemmprofil kooperieren kann.

Die erfindungsgemäße Aufgabe wird zudem mit Hilfe eines Verfahrens nach Patentanspruch 8 gelöst.

Die Idee der Erfindung umfasst demnach insbesondere die folgenden Schritte:
- Aufweiten des Klemmprofils bzw. eines Aufnahmespaltes des Klemmprofils,
- Anbringen der Fahrzeugfensterscheibe an dem aufgeweiteten Klemmprofil, insbesondere mit Hilfe eines an der Fahrzeugfensterscheibe befestigten, mit dem Klemmprofil zusammenwirkenden, umlaufenden Hilfsrahmens,
- Einstecken des mindestens einen Kederelementes in das Klemmprofil, so dass das Kederelement nach außen nicht über die Außenseite der Fahrzeugfensterscheibe übersteht, insbesondere auch nicht das Klemmprofil.

Die Formulierung "mit Hilfe eines an der Fahrzeugfensterscheibe befestigen, mit dem Klemmprofil zusammenwirkenden, umlaufenden Hilfsrahmens" bedeutet dabei insbesondere, dass die Fahrzeugscheibe in diesem Fall mittelbar an dem Profil befestigt wird, nämlich über besagten Hilfsrahmen. Das aufgeweitete Profil kann den Hilfsrahmen aufnehmen und dann aufgrund seiner elastischen Eigenschaften in den Ursprungszustand zurückkehren bzw. zurückschnappen, um den Hilfsrahmen (und somit auch die Fahrzeugfensterscheibe) festzulegen.

Bezüglich des Verfahrensanspruches kann im Wesentlichen auf die obigen Ausführungen zu den eine Fahrzeugfensteranordnung betreffenden Patentansprüchen verwiesen werden. Sämtliche im Zusammenhang mit den Fahrzeugfensteranordnungen beschriebenen Merkmale und Vorteile sollen auf das erfindungsgemäße Verfahren übertragbar sein und im Zusammenhang mit diesem als offenbart gelten (und umgekehrt).

Weitere Vorteile der Erfindung ergeben sich aus den nicht zitierten Unteransprüchen und sowie anhand der nachfolgenden Beschreibung der in den Zeichnungen dargestellten Ausführungsbeispiele.

In den Figuren zeigen:
- Fig. 1: in einer sehr schematischen seitlichen Schnittansicht, etwa in einer Ebene orthogonal zur Längserstreckung des Fahrzeuges, eine Fensteranordnung des Standes der Technik, wie sie oben bereits beschrieben wurde,
- Fig. 2: in einer Ansicht, etwa gemäß Fig. 1, eine erfindungsgemäße Fensteranordnung in einem montierten Zustand mit einem Hilfsrahmen, welcher von einem Klemmprofil aufgenommen ist, in welches ein Kederelement mit Einführabschnitt und Seitenabschnitt eingesteckt ist, wobei der Seitenabschnitt Dichtlippen ausbildet,
- Fig. 3: in einer Ansicht gemäß Fig. 2, ein leicht abgewandeltes Ausführungsbeispiel, bei welchem zwei separate Kederelemente vorgesehen sind und die Dichtlippen von dem Klemmprofil bereitgestellt werden,
- Fig. 4: in einer Ansicht etwa gemäß den Figuren 2 und 3 ein weiteres abgewandeltes Ausführungsbeispiel, bei welchem das Kederelement lediglich aus einem Einführabschnitt besteht, und
- Fig. 5: in einer Ansicht gemäß den Figuren 2 bis 4 ein weiteres alternatives Ausführungsbeispiel, bei welchem die Fensterscheibe Teil einer Verbundscheibeneinheit ist, und bei welcher eine innere Zweitfensterscheibe den von dem Klemmprofil gegriffenen, umlaufenden Rahmen bereitstellt.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben oder von Apostrophen, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

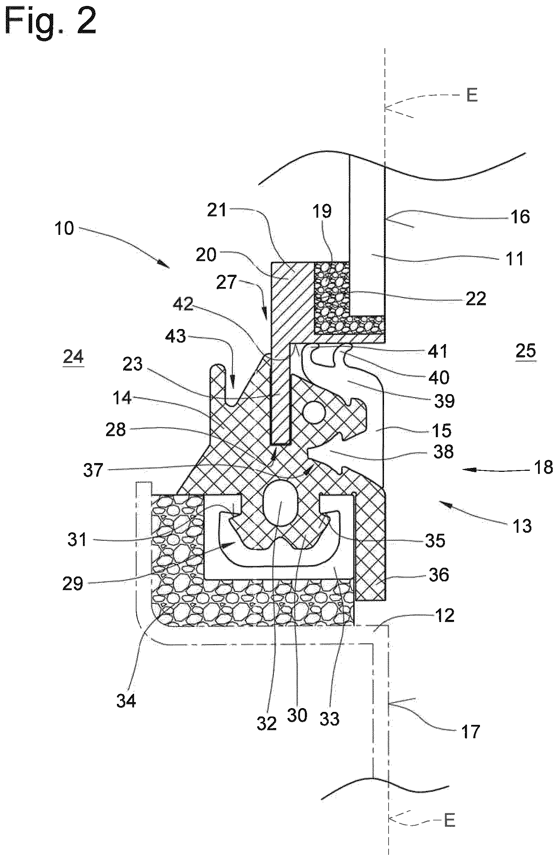

Die Figuren 2 bis 5 zeigen erfindungsgemäße Fahrzeugfensteranordnungen, welche sich dem Grund nach ähneln, aber im Detail teilweise unterscheiden.

So zeigt Fig. 2 zunächst eine sehr schematische Schnittansicht durch einen Randbereich eines (Schienen-)Fahrzeuges im unteren Bereich einer Seiten- oder Fensterscheibe 11. Die Fensterscheibe 11 ist nach oben hin abgebrochen dargestellt und Teil einer erfindungsgemäßen Fahrzeugfensteranordnung 10.

Die Fensterscheibe 11 ist dabei im Wesentlichen senkrecht ausgerichtet und erstreckt sich orthogonal zu der in Fig. 2 dargestellten Schnittebene.

Bei der Fensterscheibe 11 kann es sich lediglich exemplarisch um eine ESG-Scheibe handeln. Die Anordnung der Fensterscheibe 11 ist dabei derart getroffen, dass sie über (noch zu beschreibende Mittel) an einem Wagenkasten 12 (welcher auch als Karosserie bezeichenbar ist) des ansonsten nicht weiter dargestellten Fahrzeuges fest (aber austauschbar) angebracht ist. Von dem Wagenkasten 12 ist hierbei lediglich ein ebenfalls abgeschnitten angedeuteter Teil dargestellt, welcher insbesondere eine Außenseite 17 aufweist, zu welcher die Außenseite 16 der Fensterscheibe 11 im Wesentlichen bündig angeordnet ist (nämlich entlang einer Bündigkeitsebene E).

Zwischen der Außenseite 16 der Fensterscheibe 11 und der Außenseite 17 des dargestellten Wagenkastens 12 bzw. Wagenkastenabschnittes entsteht somit grundsätzlich ein Spalt 18, welcher vorliegend von den nachfolgend zu beschreibenden Elementen "gefüllt" ist:
In den vorliegenden Ausführungsbeispielen ist die Scheibe über eine erste Klebeschicht 19 an einem umlaufenden Hilfsrahmen 20 angeordnet, insbesondere verklebt.

Dieser Rahmen 20 umgibt die Fensterscheibe 11 vorzugsweise vollumfänglich umlaufend (also ohne Unterbrechungen) und ist somit hinsichtlich seiner Außenkontur breiter und höher ausgebildet als die eigentliche Fensterscheibe 11.

Im Querschnitt gemäß Fig. 2 weist der Hilfsrahmen 20 dabei einen inneren Halteabschnitt 21 für die Fensterscheibe 11 auf, insbesondere mit einer im Querschnitt L-förmigen Anordnungsfläche 22.

Im äußeren Bereich weist der Hilfsrahmen 20 dann einen Einsteckabschnitt 23 (insbesondere in Form einer umlaufenden Leiste) auf.

Der Hilfsrahmen 20 kann exemplarisch einstückig ausgebildet sein (oder auch mehrstückig) und ist vorzugsweise aus Metall, beispielsweise aus Aluminium, oder aus einem anderen geeigneten Material (wie Kunststoff) ausgebildet.

Fig. 2 verdeutlicht dabei, dass der gesamte Hilfsrahmen 20 grundsätzlich hinter der Bündigkeitsebene E angeordnet ist, in Bezug auf das Fahrzeuginnere 24, also nicht nach außen hin, in den Außenbereich 25, vorspringt, mithin die Bündigkeit zwischen der Außenseite 16 der Scheibe 11 und der Außenseite 17 des Wagenkastens 12 nicht stört/durchbricht.

Gleiches gilt für das mit dem Einsteckabschnitt 23 des Hilfsrahmens 20 kooperierende Klemmsystem 13, welches in dem Ausführungsbeispiel aus einem Klemmprofil 14 und (genau) einem jedenfalls teilweise in das Klemmprofil 14 einsteckbaren und gemäß Fig. 2 eingesteckten Kederelement 15 besteht.

Das Klemmprofil 14 ist dabei umlaufend um die Scheibe 11 und den Hilfsrahmen 20 herum ausgebildet.

Es besteht typischerweise aus Gummi oder einem anderen geeigneten, insbesondere (geringfügig) verformbaren, Werkstoff, wie beispielsweise einem geeigneten Kunststoff.

In seinem in Bezug auf die Fensteröffnung inneren Bereich (also in Fig. 2 oben) weist das Klemmprofil 14 zunächst einen Aufnahmespalt 28 zur Aufnahme des Einsteckabschnittes 23 des Hilfsrahmens 20 auf.

In seinem äußeren Bereich 29 (also in Fig. 2 weiter unten) weist das Klemmprofil 14 dann einen Arretierabschnitt 30 auf.

Der Arretierabschnitt 30 hat ausweislich Fig. 2 im Querschnitt eine etwa pilzkopfförmige Ausgestaltung mit Hinterschneidungen 31 und ist, insbesondere durch die Unterstützung eines Hohlraumes 32 bei Kraftbeaufschlagung geringfügig kompressierbar bzw. einschnürbar.

Der Arretierabschnitt 30 ist ausweislich Fig. 2 in einen wagenkastenseitigen (Aufnahme-)Rahmen 33 eingesteckt, wobei dieser Rahmen 33 exemplarisch über die in Fig. 2 dargestellte (zweite) Klebeschicht 34 (oder alternativ mit anderen geeigneten, nicht dargestellten Mitteln) an dem Wagenkasten 12 festgelegt ist.

Dieser (Aufnahme-)Rahmen 33 ist dabei naturgemäß ebenfalls umlaufend um die Fensterscheibe 11 (und das Klemmprofil 14) ausgebildet, insbesondere wannen- oder rinnenförmig.

In dem in Fig. 2 dargestellten, eingesteckten Zustand, hintergreift der Arretierabschnitt 30 mit seinen Hinterschneidungen 31 kooperierende Gegenflächen 35 des (Aufnahme-)Rahmens 33 und ist auf diese Weise unverlierbar an dem Rahmen 33 und somit auch dem Wagenkasten 12 gesichert oder gehalten.

An seiner Außenseite wird der (Aufnahme-)Rahmen 33 von einem Anlagefortsatz 36 des Klemmprofils 14 abgedeckt, insbesondere um für den Betrachter von außen eine homogene Optik bereitzustellen.

Ebenfalls zum Außenbereich 25 hin ausgerichtet weist das Klemmprofil 14 eine Aufnahme 37 für das Kederelement 15 auf.

Fig. 2 zeigt den Keder 15 dabei im eingesteckten Zustand, gemäß welchem der Keder 15 mit einem Einführabschnitt 38 in die Aufnahme 37 des Klemmprofils 14 eingesteckt ist.

Der eingesteckte Keder 15 sorgt in der dargestellten Haltestellung insbesondere dafür, dass sich der Aufnahmespalt 28 des Klemmprofils 14 nicht ungewollt aufweitet, in welchem Fall der Hilfsrahmen 20 ungewollt aus dem Aufnahmespalt 28 herausgelangen könnte.

Insofern sorgt der Keder 15 bzw. sein Einführabschnitt 38 für eine gewisse Selbsthemmung am inneren Bereich 27 des Klemmprofils 14.

Neben dem Einführabschnitt 38 weist das Kederelement 15 zudem noch einen Seitenabschnitt 39 auf, welcher insbesondere zwei Dichtlippen 40 und 41 ausbildet, die sich an die Unterkante 42 des Halteabschnittes 21 des Hilfsrahmen 20 anlegen und somit den oberen Bereich des Spaltes 18 abdichten.

Schließlich zeigt Fig. 2 auch noch, dass das Klemmprofil 14 im Bereich des Fahrzeuginneren 24 eine Ablaufrinne 43, insbesondere für Kondenswasser, aufweist, welche beispielsweise im Wesentlichen waagerecht, also parallel zur Unterkante der Scheibe 11 ausgerichtet sein kann. In dieser Ablaufrinne 43 kann sich beispielsweise Kondenswasser vom Inneren der Scheibe 11 sammeln und über nicht dargestellte (Stich-)Kanäle abgeleitet werden.

Eine Besonderheit der Erfindung besteht nunmehr darin, dass ausgehend von einer Montagestellung gemäß Fig. 2 auf relativ einfache Art und Weise ein Austausch der Fensterscheibe 11 bzw. der Fensteranordnung 10 möglich ist: Hierzu kann ein Nutzer einfach das Kederelement 15, bezüglich Fig. 2 nach rechts, also in den Außenbereich 25 hinein entfernen, wodurch es dem Nutzer erleichtert wird, den Aufnahmespalt 28 des Klemmprofils 14 manuell aufzuweiten. Auf diese Weise kann der Hilfsrahmen 20 (samt Fensterscheibe 11) einfach entnommen werden, da der Einsteckabschnitt 23 aus dem dann aufgeweiteten Aufnahmespalt 28 relativ leicht herausgelangen kann (das Entfernen von Schrauben oder Kleber ist nicht nötig).

Für eine Montage der Fensterscheibe 11 oder einer Ersatzfensterscheibe gilt der umgekehrte Vorgang:
Beim Einsetzen der Fahrzeugfensterscheibe kann das Klemmprofil dann natürlich vorab aufgeweitet und das Kederelement nachfolgend eingesteckt werden.

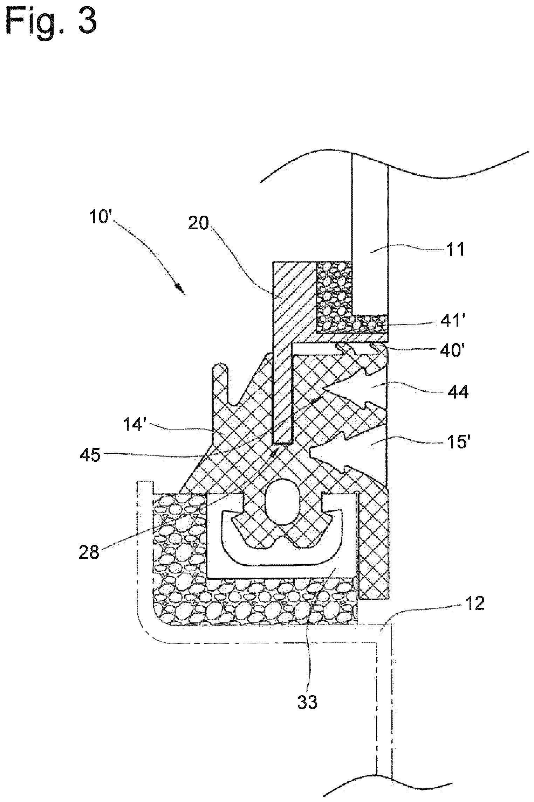

Fig. 3 zeigt eine geringfügige Abwandlung einer erfindungsgemäßen Fahrzeugfensteranordnung 10', welche sich von der Anordnung gemäß Fig. 2 nur in Details unterscheidet:
So ist gemäß Fig. 3 das Klemmprofil 14' leicht anders ausgebildet, da es hier selbst (und nicht das Kederelement) die Dichtlippen 40' und 41' ausbildet.

Das Kederelement 15' besteht hingegen lediglich aus einem Einführabschnitt (also ohne zusätzlichen Seitenabschnitt). Dafür ist (als separater Körper) ein Hilfskeder 44 vorgesehen, welcher in eine Hilfsaufnahme 45 des Klemmprofils 14' eingesteckt ist. Dieser Hilfskeder 44 kann insbesondere die Dichtungslippen 40' und 41' vorspannen (insbesondere gegen den Hilfsrahmen und/oder die Fensterscheibe 11). Außerdem kann der Hilfskeder 44 zusätzlich für eine Versteifung des Aufnahmespaltes 28 im Klemmprofil 14' sorgen.

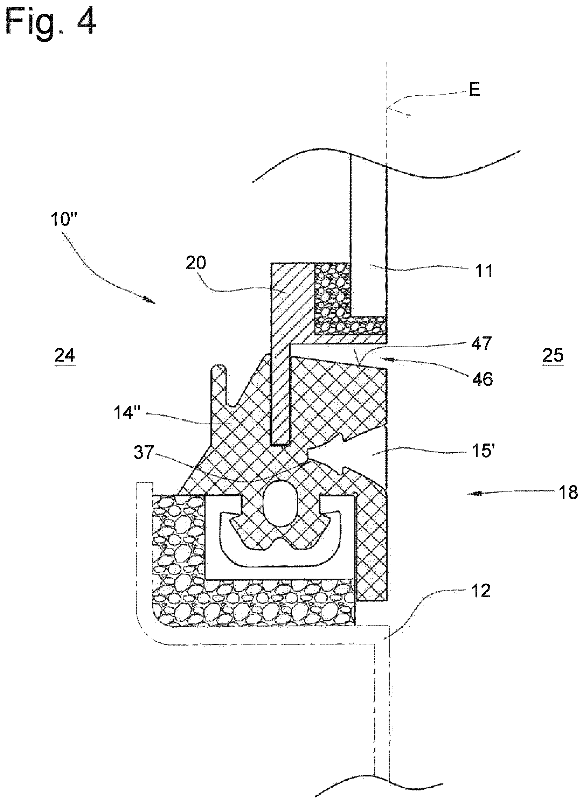

Eine weitere geringfügig andere Variante zeigt Fig. 4, in welcher ein weiteres Ausführungsbeispiel einer Fahrzeugfensteranordnung 10" dargestellt ist.

So ist hier - im Gegensatz zum Ausführungsbeispiel gemäß Fig 3 - kein Hilfskeder vorhanden. Das Kederelement 15' entspricht im Wesentlichen demjenigen gemäß Fig. 3 und ist somit vorzugsweise vollständig in die Aufnahme 37 des Klemmprofils 14" eingeführt, weist mithin keinen Seitenabschnitt auf. Wie auch in Fig. 3 tritt es vollständig hinter die Bündigkeitsebene E zurück.

Analog zu Fig. 3 weist das Kederelement 15' hier im Wesentlichen eine Keil- oder Tannenbaumform auf.

In diesem Ausführungsbeispiel gemäß Fig. 4 sind außerdem keine Dichtlippen des Klemmsystems unterhalb des Halteabschnittes des Hilfsrahmens 20 vorgesehen. So verbleibt im Bereich des Spaltes 18 insbesondere ein Restspalt 46, welcher aber nicht weiter schädlich sein muss, beispielsweise da das Klemmprofil 14" eine Ablaufschräge 47 aufweist (welche exemplarisch zum Außenbereich 25 hin abfällt).

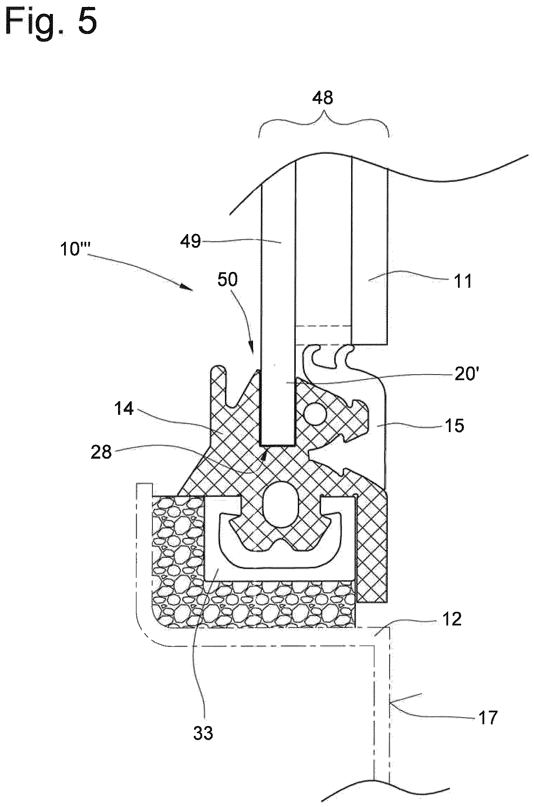

Schließlich zeigt Fig. 5 ein letztes Ausführungsbeispiel einer erfindungsgemäßen Fahrzeugfensteranordnung 10‴, welche in wesentlichen Bereichen der Fahrzeugfensteranordnung 10 gemäß Fig. 2 entspricht, insbesondere hinsichtlich der Ausgestaltung des Klemmprofils 14, des Wagenkastens 12 und des (Aufnahme-)Rahmens 33.

Auch die Fensterscheibe 11 ist wie in den anderen Ausführungsbeispielen bündig mit der Außenseite 17 des Wagenkastens 12 angeordnet.

Der Unterschied ist bei dem Ausführungsbeispiel gemäß Fig. 5 allerdings, dass die Fensterscheibe 11 hier (nicht als ESG-Scheibe ausgebildet, sondern) Teil einer Verbundscheibe 48 ist.

Die Verbundscheibe 48 umfasst dabei die Fensterscheibe 11 sowie eine Innenscheibe 49.

Diese Innenscheibe 49 bildet mit einem äußeren Abschnitt 50 den umlaufenden Hilfsrahmen 20' aus. Dieser umlaufende Hilfsrahmen 20', welcher von dem Außenabschnitt der Innenscheibe 49 bereitgestellt wird, steckt, wie der Hilfsrahmen 20 ausweislich Fig. 2, gleichfalls in dem Aufnahmespalt 28 des Klemmprofils 14 ein und wird dort gehalten, insbesondere durch das Vorhandensein des Kederelementes 15.

Die Innenscheibe 49 weist dabei typischerweise sowohl in vertikaler als auch in horizontaler Richtung eine größere Längserstreckung auf als die Fensterscheibe 11, um mit dem äußeren Abschnitt 50 den umlaufenden Hilfsrahmen 20' bereitstellen zu können (durch welchen man typischerweise hindurchsehen kann, da dieser Bestandteil der Innenscheibe 49 ist).

Bezüglich der Figuren 2 bis 5 sei abschließend angemerkt, dass diese einen Ausschnitt aus dem unteren Bereich der Fensteranordnung bzw. der Fensterscheibe 11 zeigen. Ein analoger Querschnitt zieht sich jedoch umlaufend typischerweise um die gesamte Scheibe 11 herum, so dass beispielsweise am oberen Bereich der Scheibe 11 eine spiegelsymmetrisch umgekehrte Anordnung (z. B. von Aufnahmerahmen 33 und Klemmsystem 13 vorgesehen ist). Vergleichbares gilt auch für die Seitenbereiche.

Hierbei könnte insbesondere im oberen Bereich und auch im Seitenbereich natürlich ein Element wie die Ablaufrinne 43 fehlen, wobei man das Klemmprofil 14 wohl typischerweise trotzdem umlaufend mit Ablaufrinne versehen würde (insbesondere aus Gründen der einfachen Herstellbarkeit, wenn auch die Ablaufrinne im seitlichen und oberen Bereich der Scheibe 11 wohl weniger Sinn ergeben würde).

## Patentansprüche

1. Fahrzeugfensteranordnung (10) für ein Schienen- oder Nutzfahrzeug, umfassend eine Fensterscheibe (11), welche mit einer Außenseite (16) im Wesentlichen bündig zu einer sie umgebenden Außenseite (17) des Wagenkastens (12) des Schienen- oder Nutzfahrzeuges angeordnet ist, wobei die Fensterscheibe (11) über ein Klemmsystem (13), bestehend aus einem, insbesondere aus Gummi ausgebildeten, Klemmprofil (14) und mindestens einem, jedenfalls teilweise in das Klemmprofil (14) einsteckbaren Kederelement (15), an dem Wagenkasten (12) festgelegt ist, wobei an der Fensterscheibe (11) ein mit dem Klemmsystem (13) zusammenwirkender, umlaufender Hilfsrahmen (20) befestigt ist, der beabstandet von der Außenseite (16) der Fensterscheibe (11) angeordnet ist, insbesondere über den Rand der Fensterscheibe (11) vorragt, und wobei weder das Klemmprofil (14) noch das mindestens eine in das Klemmprofil (14) eingesteckte Kederelement (15) nach außen über die Außenseite (16) der Fensterscheibe (11) überstehen, **dadurch gekennzeichnet, dass** das Klemmprofil (14) formschlüssig in eine wagenkastenseitige Aufnahme (33) eingreift, wobei die Aufnahme (33) von einem wagenkastenseitigen Aufnahme-Rahmen bereitgestellt wird, welcher an dem Wagenkasten (12) verklebt ist.

2. Fahrzeugfensteranordnung (10) nach Anspruch 1, **dadurch gekennzeichnet, dass** das Kederelement (15) einen in das Klemmprofil (14) einsteckbaren Einführabschnitt (38) und einen nicht in das Klemmprofil (14) einsteckbaren Seitenabschnitt (39) aufweist, welcher vorzugsweise als Dichtung ausgebildet ist, die weiter vorzugsweise in einen Spalt zwischen Klemmprofil (14) und Fensterscheibe (11) eingreift.

3. Fahrzeugfensteranordnung (10, 10') nach einem der voranstehenden Ansprüche, **dadurch gekennzeichnet, dass** das Klemmsystem (13) mindestens eine Dichtlippe (40, 41, 40', 41') im Bereich der Fensterscheibe (11) ausbildet, welche insbesondere von einem Hilfskeder (44) auf die Fensterscheibe (11) zu spannbar ist.

4. Fahrzeugfensteranordnung (10) nach einem der voranstehenden Ansprüche, **dadurch gekennzeichnet, dass** das Klemmprofil (14) eine Ablaufrinne (43) ausbildet, insbesondere an der Innenseite der Fensterscheibe (11) und/oder des Hilfsrahmens (20).

5. Fahrzeugfensteranordnung (10') nach einem der voranstehenden Ansprüche, **dadurch gekennzeichnet, dass** das mindestens eine Kederelement (15', 44) (achs-)symmetrisch ausgebildet ist.

6. Fahrzeugfensteranordnung (10) nach einem der voranstehenden Ansprüche, **dadurch gekennzeichnet, dass** der umlaufende Hilfsrahmen (20) an der Fensterscheibe (11) verklebt ist und/oder aus Metall, insbesondere Aluminium, besteht.

7. Fahrzeugfensteranordnung (10‴) nach einem der voranstehenden Ansprüche, **dadurch gekennzeichnet, dass** der umlaufende Hilfsrahmen (20') von einer Zweitfensterscheibe (49) bereitgestellt wird, welche der Innenseite der Fensterscheibe (11) zugeordnet ist, insbesondere als Teil eines Scheibenverbundsystems (48).

8. Verfahren zum Festlegen einer Fahrzeugfensterscheibe (11) in einer Wagenkastenöffnung eines Schienen- oder Nutzfahrzeuges, unter Nutzung eines Klemmsystems (13), bestehend aus einem, insbesondere aus Gummi ausgebildeten, Klemmprofil (14) und mindestens einem, jedenfalls teilweise in das Klemmprofil (14) einsteckbaren Kederelement (15), bei welchem Verfahren die Fahrzeugfensterscheibe (11) mit einer Außenseite (16) im Wesentlichen bündig zu einer sie umgebenden Außenseite (17) des Wagenkastens (12) des Schienen- oder Nutzfahrzeuges angeordnet wird, wobei das Klemmprofil (14) formschlüssig in eine wagenkastenseitige Aufnahme (33) eingreift, und wobei die Aufnahme (33) von einem wagenkastenseitigen Aufnahme-Rahmen bereitgestellt wird, welcher an dem Wagenkasten (12) verklebt ist, umfassend die Schritte:
- Aufweiten des Klemmprofils (14), insbesondere eines Aufnahmespaltes (28) des Klemmprofils (14),
- Anbringen der Fahrzeugfensterscheibe (11) an dem aufgeweiteten Profil (14), insbesondere mit Hilfe eines an der Fahrzeugfensterscheibe befestigten, mit dem Klemmprofil (14) zusammenwirkenden, umlaufenden Hilfsrahmens (20),
- Einstecken des mindestens einen Kederelementes (15) in das Klemmprofil (14), so dass das Kederelement (15) nach außen nicht über die Außenseite (16) der Fahrzeugfensterscheibe (11) übersteht, insbesondere auch nicht das Klemmprofil (14).

## Claims

1. Vehicle window assembly (10) for a rail or commercial vehicle, comprising a window pane (11) which is arranged with an outer side (16) essentially flush with a surrounding outer side (17) of the vehicle body (12) of the rail or commercial vehicle, wherein the window pane (11) is fixed to the vehicle body (12) via a clamping system (13) consisting of a clamping profile (14), in particular made of rubber, and at least one keder element (15) that can be inserted at least partially into the clamping profile (14), wherein an circumferential auxiliary frame (20) that cooperates with the clamping system (13) is secured to the window pane (11) and is arranged at a distance from the outer side (16) of the window pane (11), in particular protrudes beyond the edge of the window pane (11), and wherein neither the clamping profile (14) nor the at least one keder element (15) inserted into the clamping profile (14) protrude outward beyond the outer side (16) of the window pane (11), **characterized in that** the clamping profile (14) engages positively in a receptacle (33) on the vehicle body side, wherein the receptacle (33) is provided by a receptacle frame on the vehicle body side, which is bonded to the car body (12).

2. Vehicle window assembly (10) according to claim 1, **characterized in that** the keder element (15) has an insertion section (38) that can be inserted into the clamping profile (14) and a side section (39) that cannot be inserted into the clamping profile (14), which side section (39) is preferably designed as a seal, which further preferably engages in a gap between the clamping profile (14) and the window pane (11).

3. Vehicle window assembly (10, 10') according to one of the preceding claims, **characterized in that** the clamping system (13) forms at least one sealing lip (40, 41, 40', 41') in the area of the window pane (11), which can in particular be tensioned towards the window pane (11) by an auxiliary keder (44).

4. Vehicle window assembly (10) according to one of the preceding claims, **characterized in that** the clamping profile (14) forms a drainage channel (43), in particular at the inner-side of the window pane (11) and/or the auxiliary frame (20).

5. Vehicle window assembly (10') according to one of the preceding claims, **characterized in that** the at least one keder element (15', 44) is designed to be (axially) symmetrical.

6. Vehicle window assembly (10) according to one of the preceding claims, **characterized in that** the circumferential auxiliary frame (20) is bonded to the window pane (11) and/or is made of metal, in particular aluminum.

7. Vehicle window assembly (10‴) according to one of the preceding claims, **characterized in that** the circumferential auxiliary frame (20') is provided by a second window pane (49) which is associated with the inside of the window pane (11), in particular as part of a pane composite system (48).

8. Method for securing a vehicle window pane (11) in a vehicle body opening of a rail or commercial vehicle, using a clamping system (13) consisting of a clamping profile (14), in particular made of rubber, and at least one keder element (15) that can be inserted at least partially into the clamping profile (14), in which method the vehicle window pane (11) is arranged with an outer side (16) essentially flush with a surrounding outer side (17) of the vehicle body (12) of the rail or commercial vehicle, wherein the clamping profile (14) engages positively in a receptacle (33) on the vehicle body side, and wherein the receptacle (33) is provided by a receptacle frame on the vehicle body side, which is bonded to the vehicle body (12), comprising the steps:
- expanding the clamping profile (14), in particular a receiving gap (28) of the clamping profile (14),
- attaching the vehicle window pane (11) to the expanded profile (14), in particular with the aid of a circumferential auxiliary frame (20) attached to the vehicle window pane and cooperating with the clamping profile (14),
- inserting the at least one keder element (15) into the clamping profile (14) so that the keder element (15) does not protrude outward beyond the outer side (16) of the vehicle window pane (11), in particular also not the clamping profile (14).

## Revendications

1. Dispositif de fenêtre de véhicule (10) pour un véhicule ferroviaire ou utilitaire, comprenant une vitre de fenêtre (11) dont une face extérieure (16) est disposée de manière sensiblement affleurante par rapport à une face extérieure (17) environnante de la caisse (12) du véhicule ferroviaire ou utilitaire, la vitre de fenêtre (11) étant fixée à la caisse (12) par l'intermédiaire d'un système de serrage (13) composé d'un profilé de serrage (14), notamment en caoutchouc, et d'au moins un élément de bourrelet (15) pouvant être inséré au moins partiellement dans le profilé de serrage (14), un cadre auxiliaire périphérique (20) coopérant avec le système de serrage (13) étant fixé à la vitre de fenêtre (11), lequel cadre est disposé à distance de la face extérieure (16) de la vitre de fenêtre (11) et dépasse en particulier du bord de la vitre de fenêtre (11), et dans lequel ni le profilé de serrage (14) ni le au moins un élément de bourrelet (15) inséré dans le profilé de serrage (14) ne dépassent vers l'extérieur au-delà de la face extérieure (16) de la vitre de fenêtre (11), **caractérisé en ce que** le profilé de serrage (14) s'engage par complémentarité de forme dans un logement (33) côté caisse, le logement (33) étant fourni par un cadre de logement côté caisse, qui est collé à la caisse (12).

2. Dispositif de fenêtre de véhicule (10) selon la revendication 1, **caractérisé en ce que** l'élément de bourrelet (15) présente une partie d'insertion (38) pouvant être insérée dans le profilé de serrage (14) et une partie latérale (39) non insérable dans le profilé de serrage (14), qui est de préférence conçu comme un joint d'étanchéité qui s'engage de préférence dans un interstice entre le profilé de serrage (14) et la vitre de fenêtre (11).

3. Dispositif de fenêtre de véhicule (10, 10') selon l'une des revendications précédentes, **caractérisé en ce que** le système de serrage (13) forme au moins une lèvre d'étanchéité (40, 41, 40', 41') dans la zone de la vitre de fenêtre (11), qui peut notamment être tendue vers la vitre de fenêtre (11) à l'aide d'un bourrelet auxiliaire (44).

4. Dispositif de fenêtre de véhicule (10') selon l'une des revendications précédentes, **caractérisé en ce que** le profilé de serrage (14) forme une gouttière (43), en particulier sur la face intérieure de la vitre de fenêtre (11) et/ou du cadre auxiliaire (20).

5. Dispositif de fenêtre de véhicule (10') selon l'une des revendications précédentes, **caractérisé en ce que** le au moins un élément de bourrelet (15', 44) est réalisé de manière symétrique (par rapport à l'axe).

6. Dispositif de fenêtre de véhicule (10) selon l'une des revendications précédentes, **caractérisé en ce que** le cadre auxiliaire périphérique (20) est collé à la vitre de fenêtre (11) et/ou est en métal, en particulier en aluminium.

7. Dispositif de fenêtre de véhicule (10"') selon l'une des revendications précédentes, **caractérisé en ce que** le cadre auxiliaire périphérique (20') est fourni par une deuxième vitre (49) qui est associée à la face intérieure de la vitre de fenêtre (11), en particulier en tant que partie d'un système de vitrage feuilleté (48).

8. Procédé pour fixer une vitre de fenêtre de véhicule (11) dans une ouverture de caisse d'un véhicule ferroviaire ou utilitaire, en utilisant un système de serrage (13) composé d'un profilé de serrage (14), notamment en caoutchouc, et d'au moins un élément de bourrelet (15) pouvant être inséré au moins partiellement dans le profilé de serrage (14), procédé par lequel la vitre de fenêtre de véhicule (11) est disposée avec une face extérieure (16) sensiblement à fleur d'une face extérieure (17) de la caisse (12) du véhicule ferroviaire ou utilitaire, le profilé de serrage (14) s'engageant par complémentarité de forme dans un logement (33) côté caisse, et le logement (33) étant prévu par un cadre de logement côté caisse qui est collé à la caisse (12), comprenant les étapes suivantes :
- élargissement du profilé de serrage (14), en particulier d'une fente de logement (28) du profilé de serrage (14),
- fixation de la vitre de fenêtre de véhicule (11) sur le profilé élargi (14), en particulier à l'aide d'un cadre auxiliaire périphérique (20) fixé à la vitre de véhicule et coopérant avec le profilé de serrage (14),
- insertion d'au moins un élément de bourrelet (15) dans le profilé de serrage (14), de telle sorte que l'élément de bourrelet (15) ne dépasse pas vers l'extérieur au-delà de la face extérieure (16) de la vitre de fenêtre de véhicule (11), en particulier au-delà du profilé de serrage (14).
